# EUROPEAN PATENT APPLICATION

(11) **EP 1 780 513 A1**
(43) Date of publication of application: **02.05.2007**
(21) Application number: 06022619.8
(22) Date of filing: 30.10.2006
(51) Int. Cl.: G01D 5/16, F02M 25/07

(54) **Position detection device**

(30) Priority: 31.10.2005 JP 2005316779
(71) Applicant: ALPS ELECTRIC CO., LTD., Tokyo 145-8501 (JP)
(72) Inventor: Kikuchi, Shinji, Ota-ku Tokyo 145-8501 (JP); Ogawa, Toshio, Ota-ku Tokyo 145-8501 (JP)
(74) Representative: Schmitt-Nilson, Gerhard

(57) **Abstract**

A position detection device including an operating shaft capable of moving linearly in an axial direction; a rotor that rotates so as to convert a linear movement of the operating shaft into a rotating movement of the rotor; a pulling member that transmits the linear movement of the operating shaft to the rotor and pulls the operating shaft in association with the rotating movement of the rotor; and a magnetic detection sensor that detects an amount of rotation of the rotor.

## Description

### BACKGROUND OF THE INVENTION

### 1. Field of the Invention

The present invention relates to position detection devices and exhaust gas recirculation (EGR) sensors including the position detection devices. In particular, the present invention relates to a position detection device used in an exhaust gas recirculation (EGR) system for an automobile or the like and an EGR sensor including the position detection device.

### 2. Description of the Related Art

In general, an engine for an automobile or the like has an EGR system for recirculating a part of the exhaust gas into a cylinder and mixing the recirculated gas with injected air, thereby reducing a combustion temperature in the cylinder to reduce the discharge of nitrogen oxide (NOx). In the EGR system, the amount of recirculation of the exhaust gas is adjusted by performing open/close control of an EGR valve provided on a discharge path of the exhaust gas with a computer. An EGR sensor is used for detecting the position of the EGR valve in the open/close control of the EGR valve.

An example of a known EGR sensor includes an operating shaft capable of moving linearly in an axial direction and a variable resistor having a slider that moves together with the operating shaft and a resistor element that is in contact with the slider (see, for example, Japanese Unexamined Patent Application Publication No. 2002-21648). In such an EGR sensor, the position of the EGR valve is detected on the basis of a resistance of the variable resistor that varies as the operating shaft moves linearly.

However, in the above-described known EGR sensor, the slider constantly slides on the resistor element while the position of the EGR valve is being detected. Therefore, there is a possibility that the resistor element and the slider wear due to friction at contact portions thereof. As a result, the life of the EGR sensor or the detection accuracy of the position of the EGR valve is reduced.

### SUMMARY OF THE INVENTION

In light of the above-described problem, an object of the present invention is to provide a position detection device that has a long life and that can detect a position of a detection object with high accuracy and an EGR sensor including the position detection device.

According to the present invention, a position detection device includes an operating shaft capable of moving linearly in an axial direction; a rotating body that rotates so as to convert a linear movement of the operating shaft into a rotating movement of the rotating body; a pulling member that transmits the linear movement of the operating shaft to the rotating body and pulls the operating shaft in association with the rotating movement of the rotating body; and a magnetic detection sensor that detects an amount of rotation of the rotating body.

In the above-described structure, the linear movement of the operating shaft in the axial direction thereof is converted into the rotating movement of the rotating body, and the amount of rotation of the rotating body is detected by the magnetic detection sensor. Therefore, unlike the known position detection device, wearing of a resistor element and a slider due to friction at contact portions thereof can be prevented. As a result, the life of the device can be increased and position detection of a detection object can be performed with high accuracy.

In the above-described position detection device, preferably, the pulling member is retained such that the amount of linear movement of the operating shaft is equal to the amount of rotation of the rotating body. In such a case, when the linear movement of the operating shaft is converted into the rotating movement, it is not necessary to perform an additional process for correcting the amount of linear movement of the operating shaft and the amount of rotation of the rotating body.

For example, a rotational center of the rotating body may be positioned so as to coincide with an axial center of the operating shaft, and a length of a portion of the pulling member that extends from the axial center of the operating shaft in a direction perpendicular to the axial direction of the operating shaft may be set equal to a length of a portion of the pulling member that extends from the rotational center of the rotating body in the direction perpendicular to the axial direction of the operating shaft.

In addition, the above-described position detection device may further include a first spring member for rotating the rotating body in a predetermined direction, and the pulling member may be wound around the rotating body when the operating shaft moves linearly toward the inside of the position detection device. In such a case, the operating shaft constantly receives a force that pulls the operating shaft toward the inside of the device. Therefore, the position of the detection object that moves against this force can be detected. Accordingly, the position detection can be performed when the operating shaft is moved toward the outside of the device.

In addition, the above-described position detection device may further include a second spring member for urging the operating shaft toward the outside of the position detection device, and a spring force of the second spring member may be set to be higher than a spring force of the first spring member. In such a case, the operating shaft constantly receives a force that pushes the operating shaft toward the outside of the device. Therefore, the position of the detection object that moves against this force can be detected. Accordingly, the position detection can be performed when the operating shaft is moved toward the inside of the device.

When the second spring member is provided in addition to the first spring member, the detection direction of the detection object can be switched simply by attaching or detaching the second spring member.

In addition, preferably, the pulling member includes a string member. In such a case, the size and weight of the device can be reduced.

The above-described position detection device may be applied to an EGR sensor. In such a case, an EGR sensor having the above-described effects can be obtained.

Accordingly, the present invention provides a position detection device that has a long life and that can detect a position of a detection object with high accuracy and an EGR sensor including the position detection device.

### BRIEF DESCRIPTION OF THE DRAWINGS

Fig. 1 is a perspective sectional view illustrating the inner structure of an EGR sensor including a position detection device according to an embodiment of the present invention;
Fig. 2 is an enlarged view illustrating the inner structure of a rotor included in the EGR sensor;
Fig. 3 is an enlarged view illustrating the inner structure of a cover included in the EGR sensor;
Figs. 4A and 4B are enlarged views illustrating the structure of a case included in the EGR sensor;
Fig. 5 is an enlarged view illustrating the structure of an operating shaft included in the EGR sensor;
Figs. 6A and 6B are enlarged views illustrating the structure of the rotor included in the EGR sensor;
Figs. 7A and 7B are enlarged views illustrating the structure of a torsion spring included in the EGR sensor;
Figs. 8A and 8B are enlarged views illustrating the structure of the cover included in the EGR sensor;
Fig. 9 is an assembly diagram illustrating a method of assembling the EGR sensor;
Fig. 10 is an enlarged view illustrating the state of the torsion spring attached to the case and the rotor in the EGR sensor;
Fig. 11 is another enlarged view illustrating the state of the torsion spring attached to the case and the rotor in the EGR sensor;
Figs. 12A and 12B are enlarged views illustrating the state of the case after steps of attaching components including a step of inserting the operating shaft are performed in the process of assembling the EGR sensor;
Fig. 13 is an enlarged sectional view illustrating the arrangement of a string member in the EGR sensor;
Fig. 14 is an enlarged view illustrating a step of covering the case with the cover after a circuit board is attached to the cover in the EGR sensor;
Fig. 15 is an enlarged perspective view illustrating the relationship between a magnet and the circuit board in the EGR sensor;
Figs. 16A and 16B are a top view and a side view, respectively, illustrating the relationship between the magnet and the circuit board in the EGR sensor; and
Fig. 17 is a perspective view illustrating the inner structure of an EGR sensor according to a modification of the embodiment of the present invention.

### DESCRIPTION OF THE PREFERRED EMBODIMENT

An embodiment of the present invention will be described in detail below with reference to the accompanying drawings. In the following description, a position detection device according to the embodiment of the present invention that is applied to an EGR sensor for detecting a position of an EGR valve will be explained. However, the present invention is not limited to this, and the position detection device may also be applied to detect positions of other kinds of detection objects.

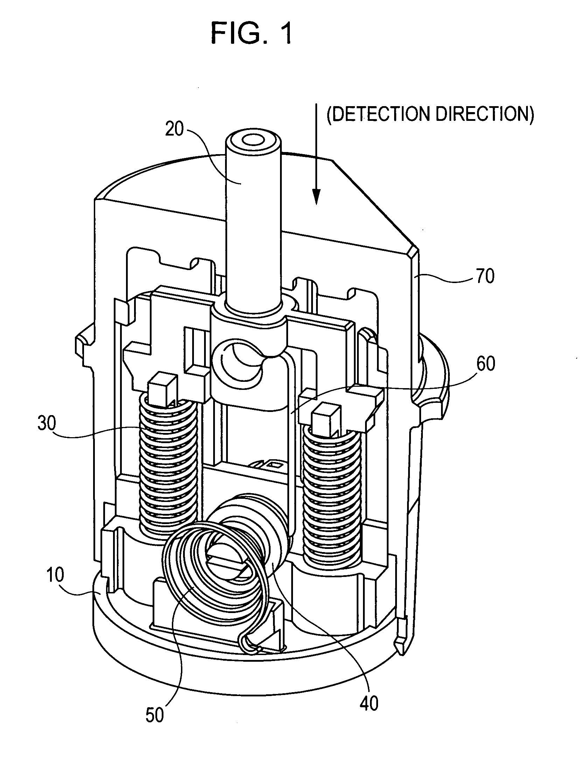

First, the inner structure of the EGR sensor to which the position detection device according to the embodiment of the present invention is applied will be described below with reference to Figs. 1 to 3. In the following description, the front and rear sides in Fig. 1 will be referred to as the front and rear sides of the EGR sensor.

Fig. 1 is a perspective sectional view illustrating the inner structure of the EGR sensor to which the position detection device according to the embodiment is applied.

As shown in Fig. 1, the EGR sensor according to the present embodiment includes a case 10 for retaining various components of the EGR sensor; an operating shaft 20 that is capable of moving linearly in an axial direction thereof (vertical direction in Fig. 1); coil springs 30 for urging the operating shaft 20 toward the outside of the device (upward in Fig. 1); a rotor 40 that rotates in association with the linear movement of the operating shaft 20; a torsion spring 50 that is attached to the case 10 and the rotor 40 and that applies a rotational force to the rotor 40 in a predetermined direction; a pulling member 60 that transmits the linear movement of the operating shaft 20 to the rotor 40 and that pulls the operating shaft 20 in association with the rotation of the rotor 40; and a cover 70 that covers the above-mentioned components and that defines an outer wall of the EGR sensor.

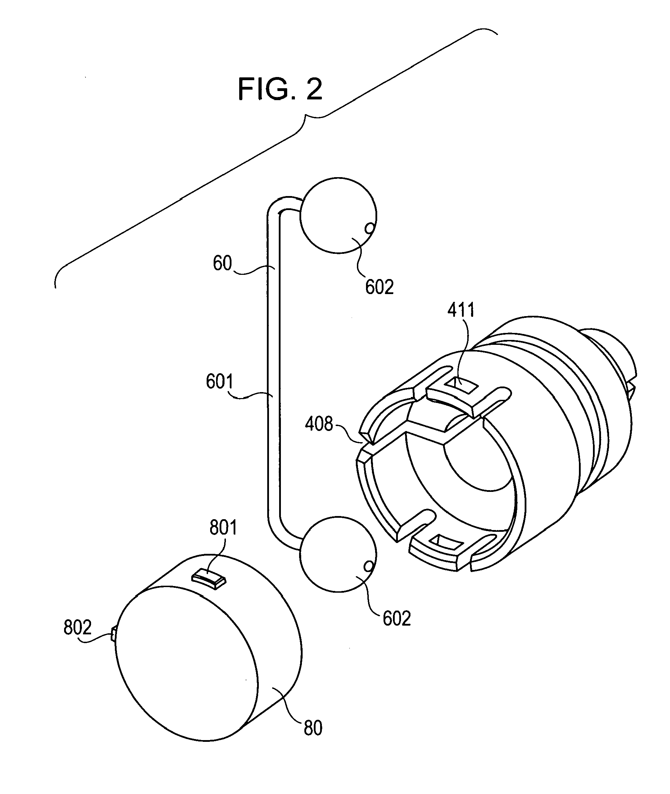

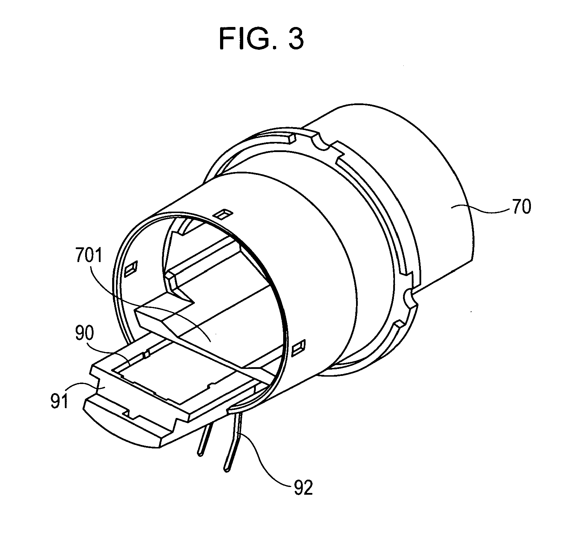

The EGR sensor shown in Fig. 1 has a magnetic rotational-angle detection sensor (hereafter referred to simply as a "magnetic detection sensor") for detecting the amount of rotation of the rotor 40 on a side of the rotor 40 facing the rear of the EGR sensor. The magnetic detection sensor is disposed so as to face a magnet attached to the rear of the rotor 40 with a predetermined gap therebetween, and includes a circuit board for detecting an external magnetic field generated by the magnet. The structure including components related to the magnetic detection sensor will be described below with reference to Figs. 2 and 3.

Fig. 2 is an enlarged view illustrating the inner structure of the rotor 40 included in the EGR sensor according to the present embodiment. Fig. 2 shows the structure viewed from the rear of the EGR sensor in Fig. 1.

As shown in Fig. 2, the rotor 40 has a space for accommodating a lower end portion of the pulling member 60 and a magnet 80, which functions as a detection object of the magnetic detection sensor, in a section of the rotor 40 adjacent to the rear of the EGR sensor. The magnet 80 is attached after the lower end portion of the pulling member 60 is placed in the space. Accordingly, the magnet 80 and the rotor 40 rotate together.

The pulling member 60 includes a string member 601 having a predetermined length and ball terminals 602 fixed to the ends of the string member 601. The string member 601 is formed of a stranded wire composed of a metal, such as stainless steel. The ball terminals 602 are fixed to the ends of the string member 601 such that the string member 601 extends through the centers of the ball terminals 602. The lower ball terminal 602 is accommodated in the rotor 40.

In the pulling member 60, the string member 601 is not limited to a stranded wire, and may also be formed of a single wire. Alternatively, a band-shaped belt may also be used. In addition, according to the present embodiment, the pulling member 60 has the ball terminals 602 at the ends thereof. However, the structure of the pulling member 60 may be modified as necessary as long as the linear movement of the operating shaft 20 can be transmitted to the rotor 40 and the operating shaft 20 can be pulled by the rotor 40. For example, a structure including a pulley or the like may also be used.

The magnet 80 is button-shaped, and the diameter of a peripheral surface of the magnet 80 is slightly smaller than that of a peripheral surface of the rotor 40. The magnet 80 has engaging pieces 801 and a guide portion 802 on the peripheral surface thereof. The engaging pieces 801 engage with respective engagement holes 411 that are formed in the peripheral surface of the rotor 40, and the guide portion 802 is inserted into a slit 408. The engagement holes 411 and the slit 408 will be described in more detail below. The magnet 80 is pushed into the rotor 40 while the guide portion 802 is fitted in the slit 408, and accordingly the engaging pieces 801 become engaged with the respective engagement holes 411. Thus, the magnet 80 is fixed to the rotor 40.

Fig. 3 is an enlarged view illustrating the inner structure of the cover 70 included in the EGR sensor according to the present embodiment. Fig. 3 shows the structure viewed from below the EGR sensor in Fig. 1.

As shown in Fig. 3, a separation wall 701, which will be described below, is provided in the cover 70 and a space for accommodating a circuit board 90 of the magnetic detection sensor is provided on a side of the separation wall 701 that faces the rear of the EGR sensor. The circuit board 90 is installed in a circuit-board case 91 such that portions other than the side facing the separation wall 701 are protected. The circuit-board case 91 in which the circuit board 90 is installed is fitted to the above-mentioned space. When the circuit-board case 91 is fitted to the above-mentioned space, the circuit board 90 is sealed from outside air. Terminals 92 attached to the circuit board 90 extend rearward from an upper section of the EGR sensor in Fig. 1.

As shown in Fig. 3, the circuit-board case 91 is provided as a component separate from the case 10. However, the present invention is not limited to this, and the circuit-board case 91 may also be formed integrally with the case 10. In the present embodiment, the circuit-board case 91 and the case 10 are provided as separate components to improve the efficiency in the process of attaching the circuit board 90. In addition, although the circuit-board case 91 is attached to the cover 70 in Fig. 3, the present invention is not limited to this, and the circuit-board case 91 may also be attached to the case 10.

Next, the magnetic detection sensor included in the EGR sensor will be described below. The circuit board 90 included in the magnetic detection sensor in the EGR sensor has a plurality of (for example, four) giant magnetoresistance (GMR) elements (magnetoresistive elements) that provide giant magnetoresistance effect. The magnet 80 has a circular shape on the side facing the circuit board 90, and N-poles and S-poles are alternately arranged at a constant interval along the circular shape.

In the magnetic detection sensor, the external magnetic field generated by the magnet 80 is applied to the magnetoresistive elements. The resistances of the magnetoresistive elements vary in accordance with the direction of the external magnetic field generated by the magnet 80, and the amount of relative movement between the magnet 80 and the magnetoresistive elements is determined on the basis of output signals from the magnetoresistive elements. Accordingly, a computer that performs the position adjustment of the EGR valve can determine the rotational angle of the rotor 40 on the basis of the amount of relative movement detected by the magnetic detection sensor.

The magnetoresistive elements (GMR elements) that sense the magnetic field and output the output signals basically include an exchange bias layer (antiferromagnetic layer), a fixed layer (pinned magnetic layer), a nonmagnetic layer, and a free layer (free magnetic layer), which are laminated on a substrate. The magnetoresistive elements are one type of giant magnetoresistance (GMR) elements that utilize giant magnetoresistance effect.

In order to cause the magnetoresistive elements to provide the giant magnetoresistance (GMR) effect, the exchange bias layer, the fixed layer, the nonmagnetic layer, and the free layer are preferably composed of α-Fe203, NiFe, Cu, and NiFe, respectively. However, the present invention is not limited to this, and various materials may be used as long as the giant magnetoresistance effect can be obtained. In addition, the laminate structure of the magnetoresistive elements is not limited to that described above as long as the giant magnetoresistance effect can be obtained.

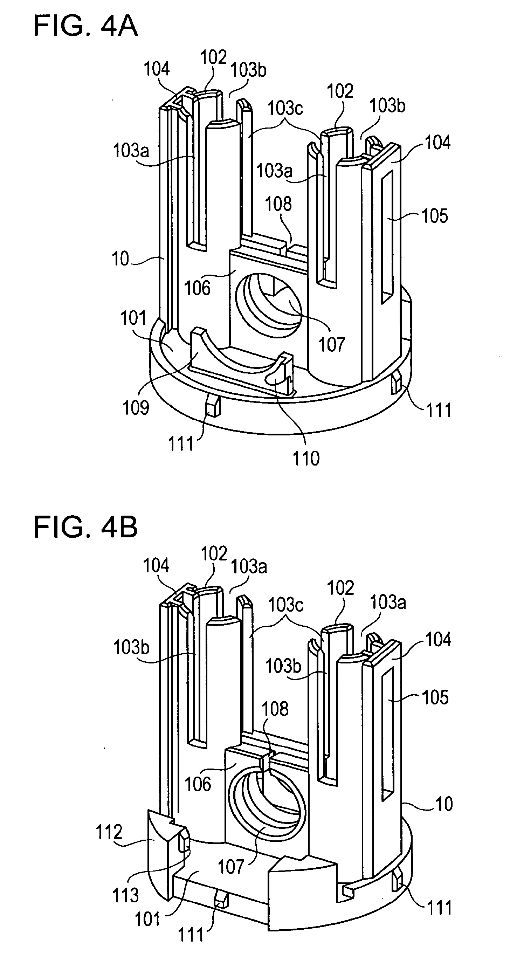

Next, the case 10, the operating shaft 20, the rotor 40, the torsion spring 50, and the cover 70, which are the major components of the EGR sensor according to the present embodiment, will be described below with reference to Figs. 4 to 8.

Figs. 4A and 4B are enlarged views illustrating the structure of the case 10 included in the EGR sensor according to the present embodiment. Fig. 4A shows the case 10 viewed from the front of the EGR sensor and Fig. 4B shows the case 10 viewed from the rear of the EGR sensor.

As shown in Figs. 4A and 4B, the case 10 is a molded component composed of synthetic resin and includes a bottom portion 101 that defines a bottom surface of the EGR sensor. The bottom portion 101 is coin-shaped, and a pair of shaft receivers 102 project upward from the bottom portion 101 in a central region thereof. The shaft receivers 102 are arranged with a predetermined gap therebetween, and each of the shaft receivers 102 is cylindrical and has a hollow inner space. In addition, the shaft receivers 102 are open at ends facing the top of the EGR sensor, so that the coil springs 30 and portions of the operating shaft 20 can be inserted into the inner spaces thereof through the openings.

Each of the shaft receivers 102 has a plurality of slits 103a to 103c for receiving an arm and coil-contact pieces, which will be described below, of the operating shaft 20. More specifically, the slits 103a and 103b facing the front and rear of the EGR sensor extend from a position near the middle point of each shaft receiver 102 to the upper end thereof so as to receive the coil-contact pieces of the operating shaft 20. Similarly, the slit 103c facing inward in each shaft receiver 102 extends from a position near the middle point of the shaft receiver 102 to the upper end thereof so as to receive the arm of the operating shaft 20. The slits 103c communicate with a space between two rotor-supporting walls, which will be described below.

In addition, the shaft receivers 102 have guide plates 104 that face the sides of the EGR sensor, the guide plates 104 being guided along guide grooves formed in an inner wall of the cover 70. Grooves 105 are formed in upper central regions of the respective guide plates 104. The grooves 105 communicate with the inner spaces of the respective shaft receivers 102 and receive projecting pieces, which will be described below, of the operating shaft 20, thereby restricting the upward movement of the operating shaft 20.

Rotor-supporting walls 106 project from the bottom portion 101 in a lower area of the shaft receivers 102 so as to connect the shaft receivers 102. The rotor-supporting walls 106 are two plate-shaped members that are separated from each other by a predetermined distance in the front-rear direction of the EGR sensor. The plate-shaped members have openings 107 for retaining the rotor 40 in a rotatable manner at central areas thereof. The rotor-supporting wall 106 that faces the rear of the EGR sensor has a slit 108 through which the string member 601 of the above-described pulling member 60 can be inserted.

A spring-supporting plate (hereafter called a "supporting plate") 109 that supports a portion of the torsion spring 50 projects from the bottom portion 101 at a position separated by a predetermined distance from the rotor-supporting walls 106 that faces the front of the EGR sensor. The supporting plate 109 has an arc-shaped portion for receiving a portion of the torsion spring 50 at the top of the supporting plate 109. In addition, the supporting plate 109 has a coil-retaining piece 110 for retaining one end of the torsion spring 50 at a right end of the supporting plate 109 on a side facing the front of the EGR sensor.

A plurality of engaging pieces 111 are formed at predetermined positions on a peripheral surface of the bottom portion 101. The engaging pieces 111 engage with respective engagement holes formed in the cover 70 at predetermined positions thereof, which will be described below. The engaging pieces 111 slightly project from the bottom portion 101, and are chamfered at top ends thereof. Since the top ends of the engaging pieces 111 are chamfered, the cover 70 can be easily attached. According to the present embodiment, the engaging pieces 111 are formed at four positions so as to face the front, rear, and sides of the EGR sensor.

A pair of inserting portions 112 that are inserted into a circuit-board-receiving space of the cover 70, which will be described below, project upward from the bottom portion 101 in a section adjacent to the rear of the EGR sensor. The inserting portions 112 have shapes corresponding to the inner wall of the above-mentioned circuit-board-receiving space and the circuit-board case 91 installed in the circuit-board-receiving space. Engaging pieces 113 that engage with engagement holes formed in the circuit-board case 91 installed in the circuit-board-receiving space are formed on inwardly facing surfaces of the respective inserting portions 112.

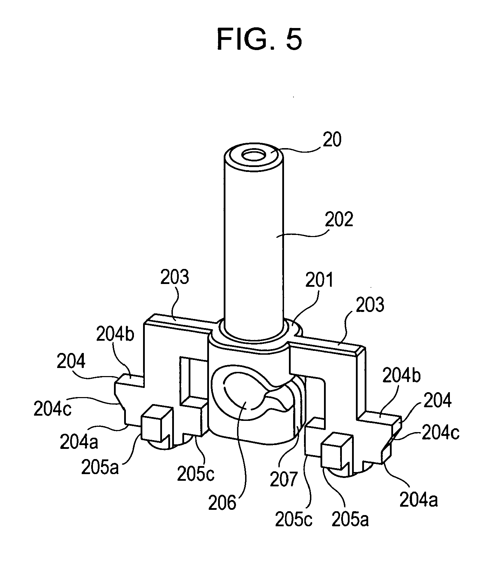

Fig. 5 is an enlarged view illustrating the structure of the operating shaft 20 included in the EGR sensor according to the present embodiment. Fig. 5 shows the operating shaft 20 viewed from the front of the EGR sensor, and a diagram showing the operating shaft 20 viewed from the rear of the EGR sensor is omitted.

As shown in Fig. 5, the operating shaft 20 is a molded component composed of synthetic resin, and includes a body 201, a shaft portion 202 disposed on top of the body 201, and arms 203 provided on the sides of the body 201. When the EGR sensor is in the assembled state, the shaft portion 202 partially projects from the cover 70 and is brought into contact with, for example, an EGR valve that functions as a detection object. The arms 203 are inserted into the inner spaces of the respective shaft receivers 102 and cause the coil springs 30 to expand or contract in accordance with a linear movement of the operating shaft 20. In addition, the arms 203 prevent the operating shaft 20 from being pulled out from the case 10.

Each of the arms 203 is bent downward at a position separated from the body 201 by a predetermined distance, and has a projecting piece 204 and coil-contact pieces 205a to 205c at an end of the bent portion. In each arm 203, the projecting piece 204 projects toward the corresponding side of the EGR sensor, and includes a bottom surface 204a, a top surface 204b, and an inclined surface 204c. The bottom surface 204a comes into contact with an upper end portion of the corresponding coil spring 30 together with the coil-contact pieces 205a to 205c. The top surface 204b is disposed in the corresponding groove 105 in the case 10, and prevents the operating shaft 20 from being pulled out from the case 10. The inclined surface 204c is defined by a tapered surface that is inclined such that the distance from an axial center of the operating shaft 20 is reduced toward the bottom of the EGR sensor, and serves to assist the insertion of the operating shaft 20 into the case 10. The coil-contact pieces 205a to 205c respectively project toward the front of the EGR sensor, the rear of the EGR sensor, and the body 201, and the bottom surfaces of the coil-contact pieces 205a to 205c come into contact with the upper end portion of the corresponding coil spring 30.

A terminal receiver 206 is provided in the body 201. The terminal receiver 206 is capable of receiving the upper ball terminal 602 of the pulling member 60 from the front of the EGR sensor. The ball terminal 602 is disposed in the terminal receiver 206 such that the axial center of the operating shaft 20 passes through the center of the ball terminal 602. A guide groove 207 for guiding the string member 601 fixed to the ball terminal 602 disposed in the terminal receiver 206 is formed in a side surface (right side surface in Fig. 5) of the body 201. When the ball terminal 602 is disposed in the terminal receiver 206, the string member 601 is inserted into the guide groove 207 so that the string member 601 is prevented from being displaced toward the front of the EGR sensor.

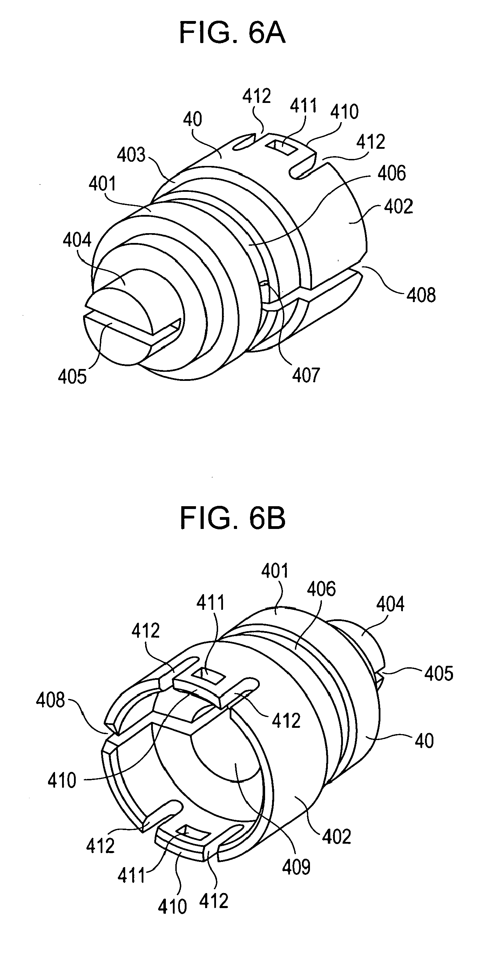

Figs. 6A and 6B are enlarged views illustrating the structure of the rotor 40 included in the EGR sensor according to the present embodiment. Fig. 6A shows the rotor 40 viewed from the front of the EGR sensor and Fig. 6B shows the rotor 40 viewed from the rear of the EGR sensor.

As shown in Figs. 6A and 6B, the rotor 40 is a molded component composed of, for example, synthetic resin and includes an inserting portion 401 that faces the front of the EGR sensor and a magnet-retaining portion 402 that faces the rear of the EGR sensor and that has a diameter larger than that of the inserting portion 401. The inserting portion 401 is inserted into the openings 107 formed in the rotor-supporting walls 106, and the magnet-retaining portion 402 retains the magnet 80. An end face of the magnet-retaining portion 402 that faces the front of the EGR sensor defines a contact surface 403 that comes into contact with the adjacent rotor-supporting wall 106 so as to restrict the rotor 40 from being inserted beyond a predetermined position toward the front of the EGR sensor through the openings 107.

A torsion-spring retainer (hereafter called a "spring retainer") 404 having a diameter smaller than that of the inserting portion 401 is provided at an end of the inserting portion 401. The spring retainer 404 projects toward the front of the EGR sensor, and has a spring-retaining groove 405 at the center. The spring-retaining groove 405 retains the torsion spring 50 at an end thereof. The spring-retaining groove 405 has a retaining portion 405a (not shown in Figs. 6A and 6B) for retaining a hook-shaped end portion of the torsion spring 50.

An accommodating groove 406, around which the string member 601 of the pulling member 60 can be wound, is formed in the peripheral surface of the inserting portion 401 in a central region thereof. The accommodating groove 406 has a diameter slightly smaller than that of the inserting portion 401 and accommodates the string member 601 in the region having the smaller diameter. The accommodating groove 406 has a guide portion 407 at a predetermined position thereof, the guide portion 407 guiding the string member 601 extracted from the inside of the rotor 40 to the accommodating groove 406. A slit 408 that extends in a direction perpendicular to the axial direction of the operating shaft 20 is formed in the peripheral surface of the magnet-retaining portion 402 at a predetermined position thereof. The slit 408 extends from the rear end of the magnet-retaining portion 402 to the accommodating groove 406, so that the slit 408 can guide the string member 601 to the accommodating groove 406.

As shown in Fig. 6B, the magnet-retaining portion 402 has an inner space for receiving the magnet 80 and a terminal receiver 409 at a position closer to the front of the EGR sensor than the inner space. The terminal receiver 409 is formed such that the lower ball terminal 602 of the pulling member 60 can be inserted into the terminal receiver 409 from the rear of the EGR sensor.

Engaging members 410 that engage with the engaging pieces 801 formed on the peripheral surface of the magnet 80 are provided along the periphery of the magnet-retaining portion 402 at an end facing the rear of the EGR sensor. Each of the engaging members 410 has the engagement hole 411 that engages with the corresponding engaging piece 801 and a pair of cutouts 412. The cutouts 412 are formed to give elasticity to the engaging member 410, so that the magnet 80 can be easily attached.

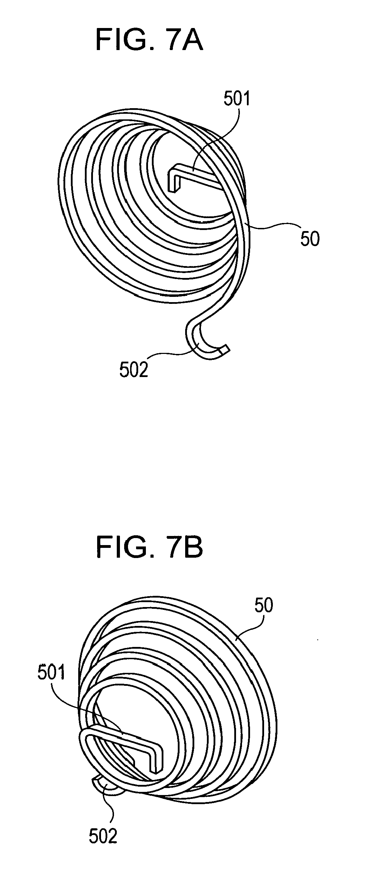

Figs. 7A and 7B are enlarged views illustrating the structure of the torsion spring 50 included in the EGR sensor according to the present embodiment. Fig. 7A shows the torsion spring 50 viewed from the front of the EGR sensor and Fig. 7B shows the torsion spring 50 viewed from the rear of the EGR sensor. For convenience of explanation, Figs. 7A and 7B show the state in which the torsion spring 50 is attached to the case 10 and the rotor 40 (the state in which the torsion spring 50 is expanded in the thrust direction thereof).

As shown in Figs. 7A and 7B, the torsion spring 50 is formed of, for example, a stainless steel wire and includes a rotor end 501 retained by the spring retainer 404 of the rotor 40 and a case end 502 retained by the coil-retaining piece 110 of the case 10. As shown in Figs. 7A and 7B, the rotor end 501 has a hook shape that is bent toward the bottom of the EGR sensor. In addition, as shown in Figs. 7A and 7B, the case end 502 has a shape corresponding to the shape of an end portion of the coil-retaining piece 110.

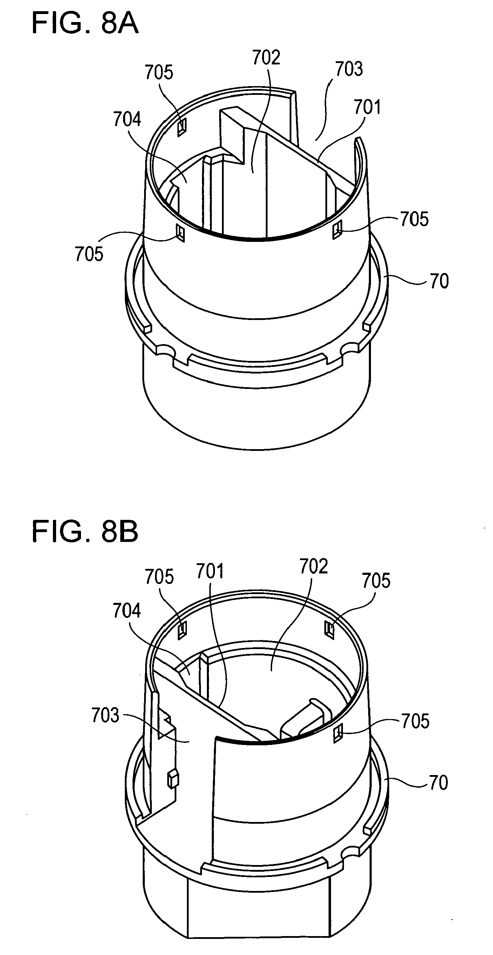

Figs. 8A and 8B are enlarged views illustrating the structure of the cover 70 included in the EGR sensor according to the present embodiment. Fig. 8A shows the cover 70 viewed from the front of the EGR sensor and Fig. 8B shows the cover 70 viewed from the rear of the EGR sensor. For convenience of explanations, Figs. 8A and 8B show the cover 70 viewed from below the EGR sensor.

As shown in Figs. 8A and 8B, the cover 70 is a molded component composed of, for example, synthetic resin and has a substantially cylindrical shape that is open at one end thereof (end adjacent to the bottom of the EGR sensor in Fig. 1). The cover 70 has the separation wall 701 for dividing the inner space of the cover 70. The separation wall 701 divides the inner space of the cover 70 into a case-receiving space 702 for receiving the case 10 that retains the above-described components and a circuit-board-receiving space 703 for receiving the circuit-board case 91 that retains the circuit board 90 as described above. The case-receiving space 702 is surrounded by the peripheral surface of the cover 70 and a wall surface of the separation wall 701. The peripheral portion of the cover 70 has an opening that faces the rear of the EGR sensor in a region corresponding to the circuit-board-receiving space 703.

Guide grooves 704 for guiding the respective guide plates 104 of the case 10 are formed in an inner wall surrounding the case-receiving space 702 of the cover 70. The cover 70 is attached to the case 10 at a predetermined position thereof by pushing the cover 70 while the guide plates 104 of the case 10 are fitted to the respective guide grooves 704.

A hole (not shown in Figs. 8A and 8B) through which the shaft portion 202 of the operating shaft 20 is inserted is formed in a side of the case-receiving space 702 facing the top of the EGR sensor (the bottom side in Figs. 8A and 8B). The diameter of this hole is substantially the same as that of the shaft portion 202, and an end portion of the shaft portion 202 projects out of the cover 70 through this hole.

A plurality of engagement holes 705 that engage with the respective engaging pieces 111 on the case 10 are formed in the peripheral surface of the cover 70 at predetermined positions thereof. The engaging pieces 111 of the case 10 are fitted into the respective engagement holes 705, and accordingly the cover 70 is fixed to the case 10.

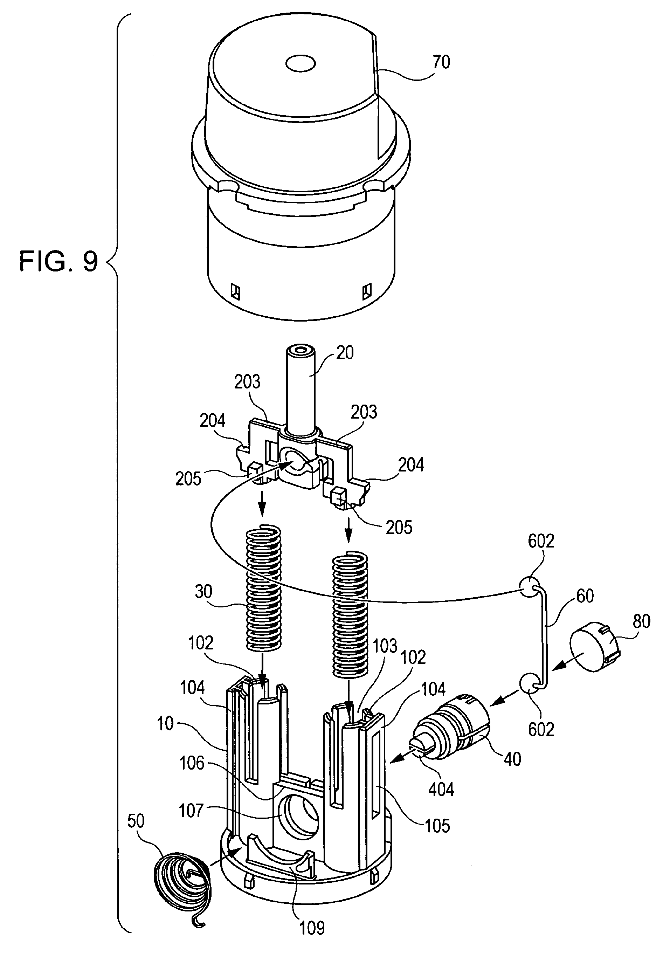

Next, a method of assembling the EGR sensor having the above-described structure will be described below with reference to Fig. 9. Fig. 9 is an assembly diagram illustrating the method of assembling the EGR sensor according to the present embodiment.

As shown in Fig. 9, in the process of assembling the EGR sensor according to the present embodiment, first, one of the ball terminals 602 is inserted into the terminal receiver 409 of the rotor 40 from the rear of the EGR sensor and the other one of the ball terminals 602 is inserted into the terminal receiver 206 of the operating shaft 20 from the front of the EGR sensor. At this time, the string member 601 is inserted into the slit 408 formed in the rotor 40. Then, after the ball terminal 602 is stored in the rotor 40, the magnet 80 is attached to the rotor 40 from the rear of the EGR sensor. More specifically, the magnet 80 is attached to the rotor 40 such that the engaging pieces 801 of the magnet 80 engage with the respective engagement holes 411 of the rotor 40. At this time, the string member 601 is inserted through the slit 108 formed in one of the rotor-supporting walls 106.

After one of the ball terminals 602 and the magnet 80 are attached to the rotor 40, the rotor 40 is inserted into the openings 107 formed in the rotor-supporting walls 106 from the rear of the EGR sensor. Then, one end of the torsion spring 50 is attached to the spring retainer 404 of the rotor 40, which projects toward the front of the EGR sensor through the openings 107, and the other end of the torsion spring 50 is attached to the coil-retaining piece 110 of the supporting plate 109 provided on the case 10.

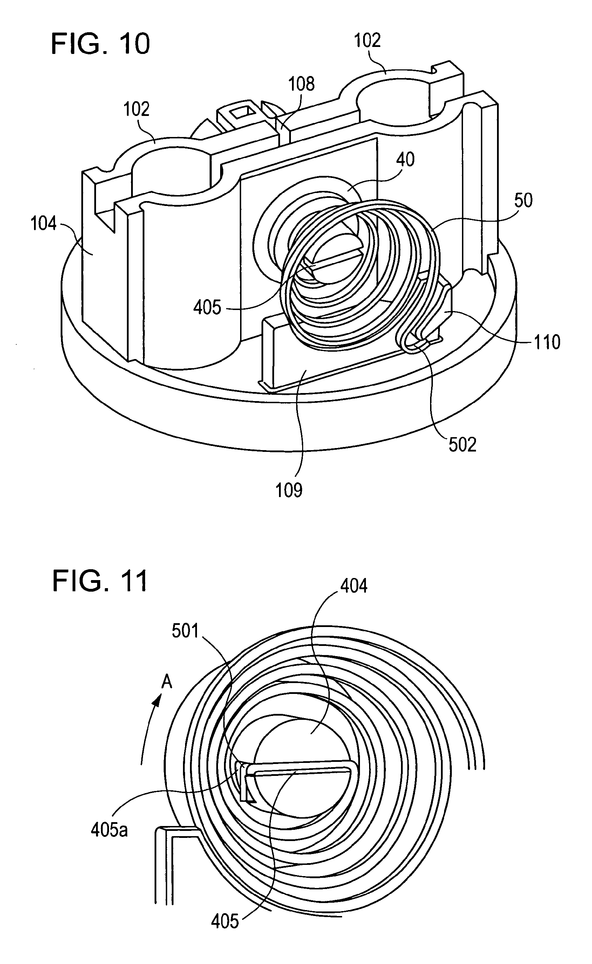

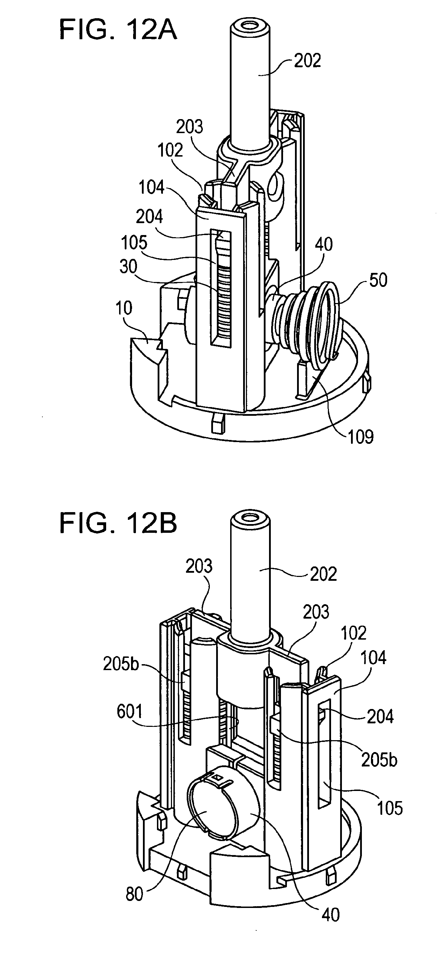

Next, the state of the torsion spring 50 attached to the case 10 and the rotor 40 will be described below with reference to Figs. 10 and 11. Figs. 10 and 11 are enlarged views illustrating the state of the torsion spring 50 attached to the case 10 and the rotor 40. For convenience of explanation, Fig. 10 shows the structure that is sectioned horizontally at a position above the rotor 40. In addition, Fig. 11 shows an enlarged view of the rotor 40 in a region around the spring retainer 404.

In the state in which the torsion spring 50 is attached to the case 10 and the rotor 40, as shown in Fig. 10, the case end 502 of the torsion spring 50 is disposed so as to surround the coil-retaining piece 110 of the supporting plate 109 from below. In addition, as shown in Fig. 11, the rotor end 501 of the torsion spring 50 is inserted into the spring-retaining groove 405 in the spring retainer 404. In this state, the hook-shaped portion of the rotor end 501 is fitted to the retaining portion 405a from above. When the torsion spring 50 is attached in this manner, the rotor 40 is pulled toward the front of the EGR sensor by a spring force of the torsion spring 50 in the thrust direction, and is urged in a rotational direction shown by the arrow A in Fig. 11 by a spring force of the torsion spring 50 in the radial direction.

Referring to Fig. 9 again, explanation of the method of assembling the EGR sensor will be continued. After the rotor 40 is attached to the case 10 as described above, the coil springs 30 are inserted into the inner spaces of the respective shaft receivers 102 from above the EGR sensor. Then, while the coil springs 30 are stored in the respective shaft receivers 102, the operating shaft 20 is pushed into the shaft receivers 102 from above the EGR sensor. More specifically, the operating shaft 20 is pushed into the shaft receivers 102 such that the arms 203 and the coil-contact pieces 205 are inserted into the respective slits 103 in the shaft receivers 102.

When the operating shaft 20 is pushed into the shaft receivers 102 as described above, the inclined surfaces 204c of the projecting pieces 204 provided on the arms 203 come into contact with the inner surfaces of the respective guide plates 104. Then, when the operating shaft 20 is pushed further downward while the inclined surfaces 204c are in contact with the inner surfaces of the guide plates 104, the arms 203 are pushed toward the axial center of the operating shaft 20 in accordance with the inclination of the inclined surfaces 204c. Then, when the operating shaft 20 is pushed further downward and the top surfaces of the projecting pieces 204 reach the respective grooves 105, the projecting pieces 204 project through the grooves 105 toward the sides of the EGR sensor. Thus, when the operating shaft 20 is pushed upward by the coil springs 30, the projecting pieces 204 function as stoppers that prevent the operating shaft 20 from being pulled out from the case 10.

When the operating shaft 20 is pushed into the shaft receivers 102, the string member 601 connected to the ball terminal 602 that is contained in the operating shaft 20 is wound around the accommodating groove 406 due to the rotating force of the rotor 40. Therefore, the string member 601 is prevented from obstructing the step of inserting the operating shaft 20 into the case 10.

Next, the state of the case 10 after the steps of attaching the above-described components are performed will be described below with reference to Figs. 12A and 12B. Figs. 12A and 12B are enlarged views illustrating the state of the case 10 after the steps of attaching the above-described components including the step of inserting the operating shaft 20 are performed. Fig. 12A shows the state of the case 10 viewed from the left front of the EGR sensor and Fig. 12B shows the state of the case 10 viewed from the rear of the EGR sensor.

When the step of inserting the operating shaft 20 into the shaft receivers 102 is finished, as shown in Figs. 12A and 12B, the case 10 is in a state such that the operating shaft 20 is pulled downward by the pulling member 60 due to the rotating force of the rotor 40 that is applied by the torsion spring 50, and is pushed upward by the spring force applied by the coil springs 30.

In the EGR sensor, the spring force applied by the coil springs 30 to push the operating shaft 20 upward is set to be larger than the rotating force of the rotor 40 applied by the torsion spring 50. Therefore, the operating shaft 20 continuously receives a force that pushes the operating shaft 20 upward. However, the operating shaft 20 is retained by the case 10 since the projecting pieces 204 are in contact with the top end surfaces of the respective grooves 105. Therefore, even when the hands of a worker who assembles the EGR sensor are removed, the operating shaft 20 does not fall from the case 10 and the state shown in Figs. 12A and 12B is maintained. In this state, the magnet 80 installed in the rotor 40 is exposed toward the rear of the EGR sensor, as shown in Fig. 12B.

In the pulling member 60, the ball terminal 602 attached to the operating shaft 20 is pushed upward, while the ball terminal 602 attached to the rotor 40 is pushed downward. Therefore, the string member 601 that connects the ball terminals 602 continuously receives a predetermined tension. The tension applied to the string member 601 is maintained even when the operating shaft 20 is moved linearly.

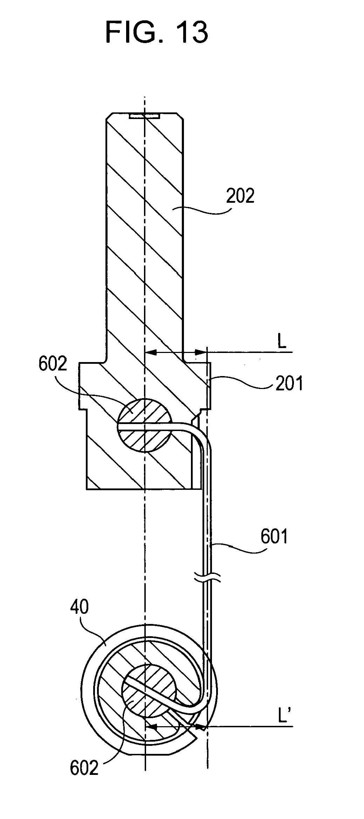

In the EGR sensor according to the present embodiment, the string member 601 is retained such that the amount of linear movement of the operating shaft 20 is equal to the amount of rotation of the rotor 40. More specifically, as shown in Fig. 13, the string member 601 is retained so as to extend parallel to the axial direction of the operating shaft 20. Fig. 13 is an enlarged sectional view illustrating the arrangement of the string member 601 in the EGR sensor. Fig. 13 shows a cross-section taken along the string member 601 and viewed from the front of the EGR sensor.

As shown in Fig. 13, in the EGR sensor, the rotational center of the rotor 40 is placed on the extension of the centerline of the operating shaft 20. In addition, a length L of a portion of the string member 601 that extends from the center of the operating shaft 20 in a direction perpendicular to the axial direction of the operating shaft 20 is equal to a length L' of a portion of the string member 601 that extends from the center of the rotor 40 in a direction perpendicular to the axial direction of the operating shaft 20. Accordingly, the string member 601 is retained such that the string member 601 is always parallel to the axial direction of the operating shaft 20. As a result, the amount of linear movement of the operating shaft 20 is equal to the amount of rotation of the rotor 40.

Although the case in which the center of rotation of the rotor 40 is placed on the extension of the centerline of the operating shaft 20 is described here, the present invention is not limited to this. The positional relationship between the rotor 40 and the operating shaft 20 may be changed as necessary as long as the amount of linear movement of the operating shaft 20 is equal to the amount of rotation of the rotor 40. It is not always necessary that the center of rotation of the rotor 40 be placed on the extension of the centerline of the operating shaft 20.

Referring to Fig. 9 again, explanation of the method of assembling the EGR sensor will be continued. After the components are attached to the case 10 as described above, the cover 70 is attached to the case 10 from above the EGR sensor. At this time, the cover 70 is attached to the case 10 such that the magnet 80 attached to the rotor 40 faces the separation wall 701. In addition, the cover 70 is attached to the case 10 such that an end of the shaft portion 202 of the operating shaft 20 that is retained by the case 10 is inserted through the opening formed in the top surface of the cover 70. When the cover 70 is attached, the cover 70 is pushed toward the case while the guide plates 104 provided on the case 10 are fitted to the respective guide grooves 704 formed in the cover 70, whereby the magnet 80 reliably faces the separation wall 701 and the shaft portion 202 is reliably inserted through the opening.

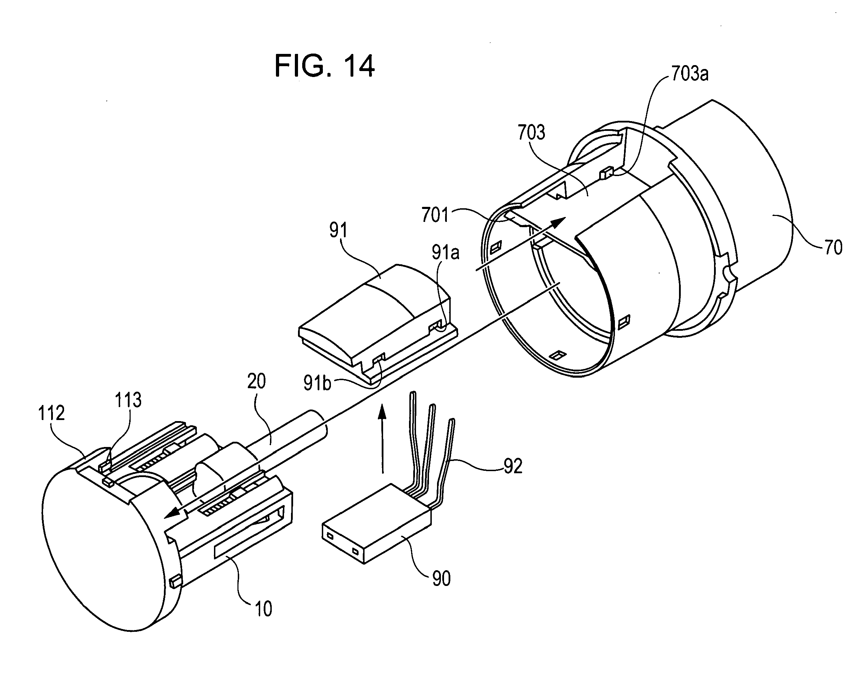

Here, a step of attaching the circuit-board case 91 containing the circuit board 90 to the cover 70 and then attaching the cover 70 to the case 10 will be described below. Fig. 14 is an enlarged view illustrating the step of attaching the circuit-board case 91 containing the circuit board 90 to the cover 70 and then attaching the cover 70 to the case 10. For convenience of explanation, Fig. 14 shows the structure viewed from below the EGR sensor.

As shown in Fig. 14, first, the circuit board 90 is placed in the circuit-board case 91 such that the exposed side of the circuit board 90 faces the separation wall 701. Then, the circuit-board case 91 containing the circuit board 90 is slid into the circuit-board-receiving space 703 from below the EGR sensor. Engagement holes 91a that engage with respective engaging pieces 703a provided in the circuit-board-receiving space 703 are formed in side surfaces of the circuit-board case 91. When the circuit-board case 91 is slid to a predetermined position in the circuit-board-receiving space 703, the engaging pieces 703a become engaged with the engagement holes 91a. Accordingly, the circuit-board case 91 is attached to the cover 70. When the circuit-board case 91 is attached to the cover 70, the circuit-board-receiving space 703 is sealed by the circuit-board case 91 and the separation wall 701.

The cover 70 to which the circuit-board case 91 is attached is attached to the case 10 that retains the above-described components so as to cover the case 10. As shown in Fig. 14, engagement holes 91b that engage with the respective engaging pieces 113 provided on the inserting portions 112 of the case 10 are formed in the side surfaces of the circuit-board case 91. When the case 10 is inserted into the cover 70 and reaches a predetermined position, the engagement holes 91b become engaged with the respective engaging pieces 113 and the engaging pieces 111 provided on the case 10 become engaged with the respective engagement holes 705 formed in the cover 70. Accordingly, the cover 70 is fixed to the case 10 and the process of assembling the EGR sensor is completed.

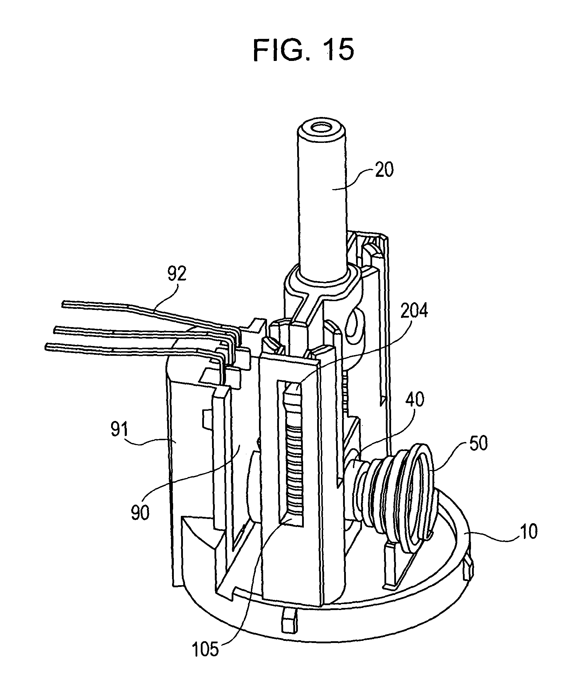

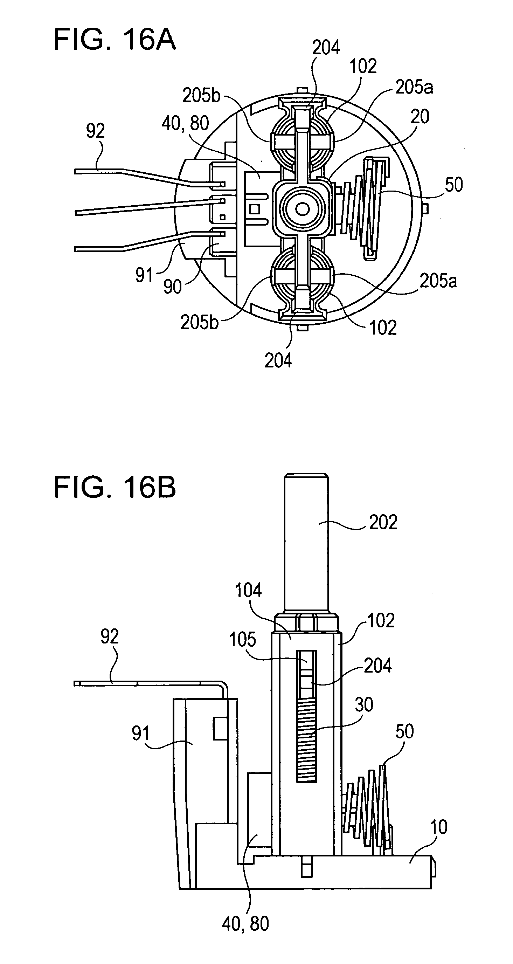

The relationship between the magnet 80 and the circuit board 90 in the state in which the cover 70 is fixed to the case 10 will be described below with reference to Figs. 15, 16A, and 16B. Fig. 15 is an enlarged perspective view illustrating the relationship between the magnet 80 and the circuit board 90 in the state in which the cover 70 is fixed to the case 10. Figs. 16A and 16B are a top view and a side view, respectively, illustrating the relationship between the magnet 80 and the circuit board 90 in the state in which the cover 70 is fixed to the case 10. For convenience of explanation, the cover 70 is omitted in Figs. 15, 16A, and 16B.

Referring to Figs. 15, 16A, and 16B, when the case 10 is covered with the cover 70 to which the circuit-board case 91 is attached, the magnet 80 and the circuit board 90 face each other with a predetermined gap therebetween. In this state, the separation wall 701 of the cover 70 (not shown) is placed between the magnet 80 and the circuit board 90. The external magnetic field generated by the magnet 80 is applied to the magnetoresistive elements included in the circuit board 90 through the separation wall 701. Since the separation wall 701 is composed of synthetic resin or the like, the separation wall 701 does not affect the external magnetic field generated by the magnet 80.

As described above, the rotor 40 is retained in the case 10 such that the rotor 40 is pulled rightward in Figs. 16A and 16B by the torsion spring 50. Therefore, the magnet 80 is prevented from moving toward the circuit board 90. Accordingly, the circuit board 90 can detect the external magnetic field generated by the magnet 80 with high stability.

Next, the operation of the EGR sensor having the above-described structure will be described below. In the EGR sensor assembled as shown in Fig. 1, when the EGR valve moves in a detection direction shown in Fig. 1, the operating shaft 20 is pressed downward against the spring force applied by the coil springs 30. When the operating shaft 20 is pushed downward, the ball terminal 602 accommodated in the operating shaft 20 is also moved downward. When the ball terminal 602 is moved downward, the rotor 40 is rotated by the rotating force applied by the torsion spring 50 and the string member 601 is wound around the accommodating groove 406.

Accordingly, the magnet 80 is rotated as the rotor 40 performs the process of winding the sting member 601. In the circuit board 90, the resistances of the magnetoresistive elements vary in accordance with the variation in the external magnetic field caused by the rotation of the magnet 80. Accordingly, the amount of relative movement between the magnet 80 and the magnetoresistive elements is determined on the basis of output signals obtained from the magnetoresistive elements. The thus-determined amount of relative movement is converted into an electric signal, and is output to a computer that performs position adjustment of the EGR valve. The computer recognizes the rotational angle of the rotor 40 on the basis of the electric signal and performs the position adjustment of the EGR valve as necessary.

In reverse, when the EGR valve moves in a direction opposite to the detection direction shown in Fig. 1 from the state in which the operating shaft 20 is pressed downward as described above, the operating shaft 20 is pushed upward by the spring force applied by the coil springs 30. When the operating shaft 20 is pushed upward, the ball terminal 602 accommodated in the operating shaft 20 is also moved upward and the string member 601 attached to the ball terminal 602 is pulled upward. Accordingly, the rotor 40 is rotated against the rotating force applied by the torsion spring 50 and the string member 601 is extracted from the accommodating groove 406.

Accordingly, the magnet 80 is rotated in accordance with the length of the string member 601 extracted from the rotor 40. Similar to the case in which the string member 601 is wound around the rotor 40, in the circuit board 90, the resistances of the magnetoresistive elements vary in accordance with the variation in the external magnetic field caused by the rotation of the magnet 80. Accordingly, the amount of relative movement between the magnet 80 and the magnetoresistive elements is determined on the basis of the output signals obtained from the magnetoresistive elements. The computer that performs the position adjustment of the EGR valve recognizes the rotational angle of the rotor 40 on the basis of the electric signal corresponding to the amount of relative movement, and performs the position adjustment of the EGR valve as necessary.

Thus, in the EGR sensor according to the present embodiment, the linear movement of the operating shaft 20 in the axial direction thereof is converted into the rotating movement of the rotor 40, and the amount of rotation of the rotor 40 is detected by the magnetic detection sensor. Therefore, unlike the known EGR sensor, wearing of a resistor element and a slider due to friction at contact portions thereof can be prevented. As a result, the life of the device can be increased and position detection of a detection object can be performed with high accuracy.

In particular, in the EGR sensor according to the present embodiment, the pulling member 60 is retained such that the amount of linear movement of the operating shaft 20 is equal to the amount of rotation of the rotor 40. More specifically, the rotational center of the rotor 40 coincides with the axial center of the operating shaft 20, and the length L of a portion of the pulling member 60 that extends from the axial center of the operating shaft 20 in a direction perpendicular to the axial direction of the operating shaft 20 is equal to the length L' of a portion of the pulling member 60 that extends from the rotational center of the rotor 40 in a direction perpendicular to the axial direction of the operating shaft 20 (see Fig. 13). Accordingly, when the linear movement of the operating shaft 20 is converted into the rotating movement of the rotor 40, it is not necessary to perform an additional process for correcting the amount of linear movement of the operating shaft 20 and the amount of rotation of the rotor 40.

The EGR sensor according to the present embodiment includes the pulling member 60 for transmitting the linear movement of the operating shaft 20, which is capable of moving linearly in the axial direction, to the rotor 40 and pulling the operating shaft 20 in association with the rotating movement of the rotor 40. In addition, the EGR sensor further includes the coil springs 30 for urging the operating shaft 20 in a direction opposite to the direction in which the operating shaft 20 is pulled by the pulling member 60. Accordingly, the operating shaft 20 continuously receives a pushing force that urges the operating shaft 20 toward the outside of the device, and the position of the detection object that moves against this force can be detected. Accordingly, the position detection can be performed when the operating shaft 20 is moved toward the inside of the device.

In the EGR sensor according to the present embodiment, the pulling member 60 for transmitting the linear movement of the operating shaft 20 to the rotor 40 and pulling the operating shaft 20 in association with the rotating movement of the rotor 40 includes a string member. Therefore, the size and weight of the device can be reduced.

The present invention is not limited to the above-described embodiment, and various modifications are possible. In the above-described embodiment, the size and shape of each component are not limited to those shown in the figures, and may be changed as necessary as long as the effects of the present invention can be obtained. Thus, the above-described embodiment may be modified in various ways within the scope of the present invention.

For example, the detection direction of the EGR sensor described in the above embodiment is downward in Fig. 1. However, the present invention is not limited to this, and the detection direction may be changed without changing the structure shown in Fig. 1 by changing the orientation in which the EGR sensor is disposed. In addition, the detection direction may also be set to a direction opposite to that shown in Fig. 1, that is, upward in Fig. 1, by omitting some components shown in Fig. 1.

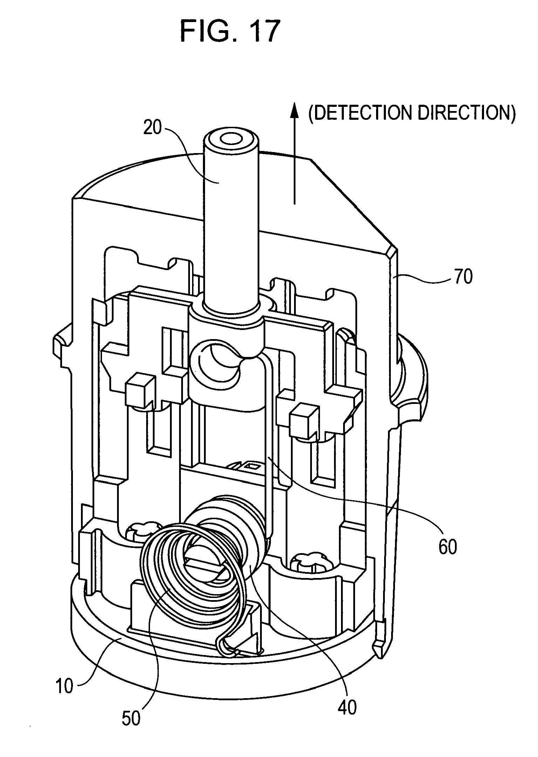

Fig. 17 is a perspective view illustrating the inner structure of an EGR sensor according to a modification of the above-described embodiment. The structure of the EGR sensor shown in Fig. 17 is similar to that shown in Fig. 1 except the coil springs 30 stored in the respective shaft receivers 102 are omitted. In this structure, since the coil springs 30 are omitted, the operating shaft 20 receives only the downward pulling force that is applied by the torsion spring 50 and transmitted via the pulling member 60. Therefore, in the assembled state, the operating shaft 20 is at the lowermost position in a movable range thereof.

When an EGR valve that functions as a detection object of this EGR sensor is moved such that the operating shaft 20 is pulled upward, the ball terminal 602 accommodated in the operating shaft 20 is also moved upward and the string member 601 attached to the ball terminals 602 is pulled upward. Accordingly, the rotor 40 is rotated against the rotating force applied by the torsion spring 50 and the string member 601 is extracted from the accommodating groove 406. Accordingly, the magnet 80 that is fixed to the rotor 40 is rotated in accordance with the length of the string member 601 extracted from the rotor 40. In the circuit board 90, the resistances of the magnetoresistive elements vary in accordance with the variation in the external magnetic field caused by the rotation of the magnet 80. Accordingly, the amount of relative movement between the magnet 80 and the magnetoresistive elements is determined on the basis of the output signals obtained from the magnetoresistive elements. The computer that performs the position adjustment of the EGR valve recognizes the rotational angle of the rotor 40 on the basis of the electric signal corresponding to the amount of relative movement, and performs the position adjustment of the EGR valve as necessary.

In reverse, when the EGR valve moves in a direction opposite to the detection direction shown in Fig. 17 from the state in which the operating shaft 20 is pulled upward as described above, the ball terminal 602 accommodated in the operating shaft 20 is also moved downward. When the ball terminal 602 is moved downward, the rotor 40 is rotated by the rotating force applied by the torsion spring 50 and the string member 601 is wound around the accommodating groove 406. Accordingly, the magnet 80 is rotated as the rotor 40 performs the process of winding the sting member 601. In the circuit board 90, the resistances of the magnetoresistive elements vary in accordance with the variation in the external magnetic field caused by the rotation of the magnet 80. Accordingly, the amount of relative movement between the magnet 80 and the magnetoresistive elements is determined on the basis of output signals obtained from the magnetoresistive elements. The thus-determined amount of relative movement is converted into an electric signal, and is output to the computer that performs position adjustment of the EGR valve. The computer recognizes the rotational angle of the rotor 40 on the basis of the electric signal and performs the position adjustment of the EGR valve as necessary.

As described above, the EGR sensor according to the present embodiment includes the pulling member 60 for transmitting the linear movement of the operating shaft 20, which is capable of moving linearly in the axial direction, to the rotor 40 and pulling the operating shaft 20 in association with the rotating movement of the rotor 40. In addition, the EGR sensor further includes the coil springs 30 for urging the operating shaft 20 in a direction opposite to the direction in which the operating shaft 20 is pulled by the pulling member 60. However, when the coil springs 30 are removed from the case 10, the operating shaft 20 continuously receives only a force applied by the pulling member 60 that pulls the operating shaft 20 toward the inside of the device. Therefore, the position of the detection object that moves against this force can be detected. Accordingly, the position detection can be performed when the operating shaft 20 is moved toward the outside of the device.

In the EGR sensor according to the present embodiment, the direction of the force applied to the operating shaft 20 by the pulling member 60 and the direction of the force applied to the operating shaft 20 by the coil springs 30 are opposite to each other. Therefore, the detection direction of the detection object can be switched between opposite directions simply by attaching or detaching the coil springs 30.

## Claims

1. A position detection device comprising:
an operating shaft capable of moving linearly in an axial direction;
a rotating body that rotates so as to convert a linear movement of the operating shaft into a rotating movement of the rotating body;
a pulling member that transmits the linear movement of the operating shaft to the rotating body and pulls the operating shaft in association with the rotating movement of the rotating body; and
a magnetic detection sensor that detects an amount of rotation of the rotating body.

2. The position detection device according to Claim 1, wherein the pulling member is retained such that the amount of linear movement of the operating shaft is equal to the amount of rotation of the rotating body.

3. The position detection device according to Claim 2, wherein a rotational center of the rotating body coincides with an axial center of the operating shaft, and
wherein a length of a portion of the pulling member that extends from the axial center of the operating shaft in a direction perpendicular to the axial direction of the operating shaft is equal to a length of a portion of the pulling member that extends from the rotational center of the rotating body in the direction perpendicular to the axial direction of the operating shaft.

4. The position detection device according to any of Claims 1 to 3, further comprising a first spring member for rotating the rotating body in a predetermined direction,
wherein the pulling member is wound around the rotating body when the operating shaft moves linearly toward the inside of the position detection device.

5. The position detection device according to Claim 4, further comprising a second spring member for urging the operating shaft toward the outside of the position detection device,
wherein a spring force of the second spring member is set to be higher than a spring force of the first spring member.

6. The position detection device according to any of Claims 1 to 5, wherein the pulling member includes a string member.

7. An EGR sensor comprising a position detection device according to any of Claims 1 to 6.
